# EUROPÄISCHE PATENTANMELDUNG

(11) **EP 1 460 583 A1**
(43) Veröffentlichungstag der Anmeldung: **22.09.2004**
(21) Anmeldenummer: 03005949.7
(22) Anmeldetag: 18.03.2003
(51) Int. Cl.: G06T 5/00, G09F 21/04, B60R 13/00, G03B 21/00

(54) **Verfahren zur Rückprojektion eines Bildes und Projektionsvorrichtung**

(71) Anmelder: Horizont Deutschland GmbH, 42117 Wuppertal (DE)
(72) Erfinder: Tillmann, Igor, 50674 Köln (DE); Gorol, Torsten, 40789 Monheim (DE)
(74) Vertreter: Richardt, Markus Albert

(57) **Zusammenfassung**

Die Erfindung betrifft ein Verfahren zur Projektion eines Bildes auf zumindest eine Fensterfläche eines Fahrzeugs, wobei die Fensterfläche als Rückprojektionsfläche ausgebildet ist, und wobei das entsprechend einer Krümmung der Fensterfläche vorverzerrte Bild auf die Fensterfläche projiziert wird.

## Beschreibung

Die Erfindung betrifft ein Verfahren zur Projektion eines Bildes, insbesondere einer Videodatei, von digitalisierten Videodaten und/oder einer Computeranimation, ein Verfahren zur Vorverzerrung eines Bildes für die Rückprojektion und ein entsprechendes Computerprogramm sowie eine Projektionsvorrichtung.

Aus dem Stand der Technik sind verschiedene Projektionssysteme bekannt, wie z. B. DLP- Projektionen; LCD- Projektionen; HDLV, DRI, TMA, LCOS- und GLV-Projektionen; ILA/D-ILA, LIMESCO-Projektionen; Laserprojektionen; Röhrenprojektion; holografische Projektionen; 3D- und Stereoprojektionen.

Solche Projektionssysteme ermöglichen zum Teil auch nicht-lineare Bildtransformationen für so genanntes Digital Image Warping (G. Wolberg, *Digital Image Warping,* IEEE Computer Society Press Los Alamitos, California, 1990; Digital Image Warping, George Wolberg, ISBN: 0-8186-8944-7, Juli 1990, Wiley-IEEE Press).

Insbesondere sind auch Projektionssysteme bekannt geworden, die eine Vorverzerrung von Bildern zur Projektion auf eine gekrümmte Projektionsfläche ermöglichen (http://www.barco.com/projection_systems/virtual_and_augmented_reality/content/products/product.asp?Element=1173).

Ferner ist es bekannt
(vgl.http://www.barco.com/projection_systems/virtual_and_augmented_ reality/content/products/product.asp?Element=1173) Image Warping zur Geometrieentzerrung anzuwenden. Hierzu werden zunächst spezielle Muster, wie z. B. horizontale und vertikale Streifen mit bekanntem Abstand zueinander, auf die Projektionsebene projiziert. Anschließend werden die reflektierten Muster mit der Kamera aufgenommen und vorverarbeitet. Durch Vergleich der Ursprungsmuster mit dem Aufgenommenen wird die Verzerrung auf der Projektionsfläche bestimmt und durch Warping des zu projizierenden Bildes ausgeglichen.

Demgegenüber liegt der Erfindung die Aufgabe zugrunde ein weiteres Projektionsverfahren sowie ein entsprechendes Verfahren zur Vorverzerrung eines Bildes, ein Computerprogrammprodukt und eine Projektionsvorrichtung zu schaffen, insbesondere zur Anwendung im Ausstellungs-, Show-, Messe- und Eventbereich.

Die der Erfindung zugrunde liegenden Aufgaben werden jeweils mit den Merkmalen der entsprechenden unabhängigen Patentansprüche gelöst. Bevorzugte Ausführungsformen der Erfindung sind in den abhängigen Patentansprüchen angegeben.

Die Erfindung ermöglicht die Rückprojektion von Bildern auf die Fensterflächen eines Fahrzeugs, insbesondere eines Kraftfahrzeugs. Hierzu werden die Fensterflächen des Fahrzeugs, auf die projiziert werden soll, als Rückprojektionsflächen ausgebildet.

Um als Rückprojektionsflächen wirken zu können, müssen die Fensterflächen matt und durchscheinend sein. Um dies zu erreichen, gibt es mehrere Möglichkeiten. Die Fensterflächen können beispielsweise mit Rückprojektionsfolien versehen werden. Diese handelsüblichen Rückprojektionsfolien können auch mit einer linearen Polarisation für 3D-Effekte ausgestattet sein. Die Fensterflächen können durch Sandstrahlen behandelt werden oder sie werden mit einer opaken, durchscheinenden Substanz bedampft. Ferner ist es auch möglich die Fenster mit einer matten, durchscheinenden Folie zu bekleben. Eine weitere Möglichkeit ist es die Fenster des Fahrzeugs auszubauen und durch Rückprojektionsflächen zu ersetzen, die jeweils der Scheibenform nachgebildet sind.

Im Inneren des Fahrzeugs werden ein oder mehrere Projektoren angeordnet, die auf eine oder mehrere der zur Rückprojektion des Fahrzeugs ausgebildeten Fensterflächen Bilder projizieren. Dabei sind die Bilder so vorverzerrt, dass die Projektion auf die im Allgemeinen gekrümmten Fensterflächen ein scharfes Bild ergibt.

Für einen außerhalb des Fahrzeugs befindlichen Betrachter können also auf die Fensterflächen des Fahrzeugs verschiedene Bilder projiziert werden, z. B. für die Zwecke der Werbung, Information und/oder Unterhaltung. Zum Beispiel kann ein Fahrzeug bei einer Messe auf diese Art und Weise eindrucksvoll präsentiert werden ebenso wie bei einem anderen Event oder in einem Ausstellungsraum eines Kraftfahrzeughändlers.

Nach einer bevorzugten Ausführungsform der Erfindung werden mehrere Fensterflächen des Fahrzeugs für die Rückprojektierung verwendet. Auf diese Art und Weise ergibt sich für den außerhalb des Fahrzeugs befindlichen Betrachter ein räumlicher Eindruck des in Teilbereiche zerlegten Gesamtbildes. Insbesondere, wenn sämtliche Fensterflächen für die Rückprojektion verwendet werden, ergibt sich für den Betrachter der Eindruck, dass der gesamte Fahrzeuginnenraum des Fahrzeugs von dem wiedergegebenen Bild durchdrungen ist.

Vorzugsweise wird dabei so vorgegangen, dass ein zu projizierendes Bild in einer Anzahl von Teilbildern aufgeteilt wird, wobei jedes der Teilbilder einer der Fensterflächen des Fahrzeugs zugeordnet wird. Vorzugsweise entspricht dabei der Anteil eines Teilbildes an dem Gesamtbild dem Anteil der Fensterfläche, auf die das Teilbild projiziert werden soll, an der gesamten Projektionsfläche. Das Teilbild wird entsprechend der Krümmung der ihn zugeordneten Fensterfläche vorverzerrt, sodass sich bei Projektion des Teilbildes auf die zugeordnete Fensterfläche ein scharfes Teilbild ergibt. Entsprechend wird für sämtliche der Teilbilder vorgegangen, sodass das Gesamtbild in Teilbilder zerlegt auf die verschiedenen Fensterflächen projiziert wird.

Je nach dem verwendeten Projektortyp kann zusätzlich zu der Vorverzerrung eine Maskierung der Teilbilder vorteilhaft sein, um eine Überlappung der Teilbilder in den Randbereichen sowie störendes Streulicht zu vermeiden. Hierzu werden die Teilbilder mit dem äußeren Umriss der jeweils zugeordneten Fensterfläche maskiert, sodass das projizierte Teilbild jeweils auf den Bereich seiner Fensterfläche beschränkt ist. Diese Maskierung kann durch entsprechende Bilddatenverarbeitung oder auch durch auf die Projektoren aufgesetzte Masken erreicht werden.

Nach einer bevorzugten Ausführungsform der Erfindung wird jedes der Teilbilder auf einem separaten Datenträger, z. B. einer DVD, gespeichert. Für jeden der Projektoren ist dann ein separates Wiedergabegerät zum Abspielen der Datenträger vorgesehen. Vorzugsweise werden die verschiedenen Wiedergabegeräte von einer Steuereinheit angesprochen, um einen synchronen Start der Wiedergabe sämtlicher der Teilbilder zu gewährleisten.

Nach einer weiteren Ausführungsform der Erfindung werden die vorverzerrten und gegebenenfalls maskierten Teilbilder in einem Gesamtbild gespeichert. Das Gesamtbild wird dann bei der Wiedergabe wieder in seine Teilbilder zerlegt, die von den jeweils zugeordneten Projektoren auf die Fensterflächen projiziert werden.

Die Zerlegung des Gesamtbildes in die Teilbilder kann durch einen handelsüblichen Splitter erfolgen. Dazu werden in den Splitter die Koordinaten der jeweiligen Teilbilder in dem Gesamtbild eingegeben. Alternativ kann die Aufteilung des Gesamtbilds in die vorverzerrten Teilbilder auch durch ein Computersystem erfolgen, welches eine entsprechende Anzahl von Videoausgängen für die verschiedenen Projektoren hat.

Grundsätzlich ist das erfindungsgemäße Projektionsverfahren nicht auf eine bestimmte Art von Bildern beschränkt. Beispielsweise können zuvor analog aufgenommene Filme digitalisiert werden, um sie in vorverzerrte Teilbilder zerlegt auf den Fensterflächen eines Fahrzeugs wiederzugeben. Ferner können auch bereits digitalisierte Videodateien oder Computeranimationen auf diese Art und Weise projiziert werden. Beispielsweise können mit Hilfe einer Computeranimation verschiedene Funktionsmerkmale des Fahrzeugs veranschaulicht werden, wie z. B. verschiedene Optionen für die Innenraumaufteilung oder verschiedene Muster und Farben für die Gestaltung des Fahrzeuginnenraums.

Nach einer weiteren bevorzugten Ausführungsform der Erfindung sind zumindest auf einer der Fensterflächen berührungssensitive Mittel angeordnet. Solche berührungssensitiven Mittel sind an sich für so genannte Touchscreens bekannt und sind in Form von Folien kommerziell erhältlich. Desweiteren können auch Kameraabtastsyteme verwendet werden. Typischerweise weist eine solche berührungssensitive Folie eine Matrix von berührungssensitiven Elementen auf; wenn ein Benutzer eines der berührungssensitiven Elemente mit seinem Finger berührt, so gibt die berührungssensitive Folie ein Signal ab, welches ähnlich dem Signal einer Computermaus in einen Computer oder ein anderes Steuerungsgerät eingegeben werden kann.

Zum Beispiel wird auf die Fensterfläche, auf der sich die berührungssensitive Folie befindet, ein Auswahlbild projiziert. Beispielsweise beinhaltet das Auswahlbild verschiedene virtuelle Tasten oder Knöpfe, durch deren Betätigung ein Benutzer ein bestimmtes Bild, Bildsequenz oder Computeranimation auswählen kann. Beispielsweise wird in dem Auswahlfenster eine Taste mit der Aufschrift _{"}Innenraumaufteilung" und eine Taste mit der Aufschrift _{"}Farben und Muster" angezeigt.

Wenn der Benutzer die berührungssensitive Folie dort berührt, wo die Taste _{"}Innenraumaufteilung" angezeigt wird, so wird von der berührungssensitiven Folie ein entsprechendes Signal an den Steuerungscomputer abgegeben, der sodann eine Computeranimation zur Darstellung der verschiedenen Möglichkeiten der Innenraumaufteilung des Fahrzeugs auswählt. Diese wird sodann auf den Fensterflächen des Fahrzeugs wiedergegeben.

Berührt der Benutzer hingegen die berührungssensitive Folie dort, wo die Taste _{"}Muster und Farben" angezeigt wird, so wird wiederum ein entsprechendes Signal von der berührungssensitiven Folie an den Steuerungscomputer ausgegeben, der die entsprechende Animation zur Darstellung der Farb- und Musteroptionen für die Innenraumausstattung auswählt und die Wiedergabe startet.

Im Weiteren werden bevorzugte Ausführungsformen der Erfindung mit Bezugnahme auf die Zeichnungen näher erläutert. Es zeigen:
- Figur 1: ein Flussdiagramm einer Ausführungsform des erfindungsgemäßen Verfahrens zur Vorverzerrung eines Bildes,
- Figur 2: ein Beispiel für eine Aufteilung eines Bildes in Teilbilder, die verschiedenen Fensterflächen eines Fahrzeugs zugeordnet sind,
- Figur 3: ein Blockdiagramm eines Postproductionsystems zur Erzeugung der vorverzerrten Teilbilder,
- Figur 4: ein Blockdiagramm einer Projektionsvorrichtung.

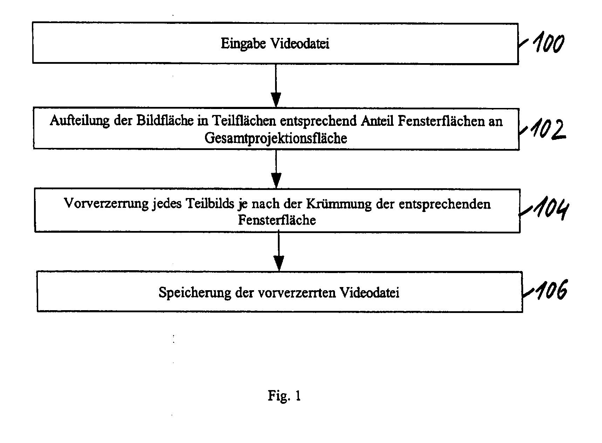

Die Figur 1 zeigt ein Flussdiagramm einer Ausführungsform des erfindungsgemäßen Verfahrens zur Vorverzerrung eines Bildes für die Zwecke der Rückprojektion auf die Fensterflächen eines Fahrzeugs. In dem Schritt 100 wird eine Videodatei eingegeben. Die Videodatei ist mit einer normalen Aufnahmetechnik zur Wiedergabe auf einer üblichen Projektionsleinwand aufgenommen wurden; alternativ handelt es sich um eine computergenerierte Videodatei, die ebenfalls zur Ausgabe auf einem normalen Bildschirm oder einer ebenen Projektionsleinwand erzeugt worden ist.

In dem Schritt 102 wird die Bildfläche in Teilflächen unterteilt. Die einzelnen Teilflächen werden dabei Fensterflächen des Fahrzeugs zugeordnet, die für die Rückprojektion verwendet werden sollen. Die Aufteilung der Bildfläche in Teilflächen erfolgt dabei vorzugsweise so, dass der Flächenanteil einer Teilfläche an der gesamten Bildfläche dem Flächenanteil der Fensterfläche, auf die die entsprechende Teilfläche projiziert werden soll, an der Gesamtprojektionsfläche entspricht. Auf diese Art und Weise wird erreicht, dass die einzelnen Teilbilder der Projektion die gleichen Größenverhältnisse wie in dem Originalbild haben.

In dem Schritt 104 wird jedes der durch die Aufteilung der Bildfläche in Teilflächen resultierende Teilbild vorverzerrt und zwar entsprechend der Krümmung der Fensterfläche, auf die das betreffende Teilbild projiziert werden soll.

Die Aufteilung der Bildfläche in Teilflächen sowie die Vorverzerrung der Teilbilder kann mit Hilfe von für die so genannte Postproduction geeignete Software vorgenommen werden. Insbesondere können hierzu die Programme Adobe After Effects (http://www.adobe.com/products/aftereffects/main.html), Adobe Photoshop (http://www.adobe.com/products/photoshop/main.html) oder Avid Studio (http://www.avid.com/products/product_list.asp?marketlD=1) eingesetzt werden.

Hierzu muss die räumliche Form der Fensterfläche in einem geeigneten Dateiformat in das betreffende Programm eingegeben werden. Zur Beschreibung der dreidimensionalen Form einer Fensterfläche eignet sich insbesondere eine dreidimensionale binäre Maske, die für jeden Voxel in dem von der Maske umfassten Volumenbereich angibt, ob der Voxel zu der Projektionsfläche gehört oder nicht. Beispielsweise werden Voxel, die nicht zu der Projektionsfläche gehören mit 0 gekennzeichnet und Voxel, die auf der Projektionsfläche liegen, werden mit 1 gekennzeichnet.

Die dreidimensionale Form der Fensterfläche kann beispielsweise aus Spezifikationen des Fahrzeugherstellers entnommen werden. Wenn entsprechende Herstellerangaben nicht vorliegen, kann die Krümmung der Fensterflächen auch durch Projektion eines speziellen Linienmusters auf die Fensterflächen gemessen werden. Hierzu können an sich bekannte Verfahren der Geometrieentzerrung und des Image Warping eingesetzt werden.

In dem Schritt 106 wird die vorverzerrte Videodatei gespeichert. Dies kann so erfolgen, dass für jedes Teilbild eine separate Videodatei gespeichert wird. Alternativ wird aus den einzelnen Teilbildern ein Gesamtbild erzeugt, welches als eine Videodatei abgespeichert wird. Die Zerlegung des Gesamtbildes in die einzelnen vorverzerrten Teilbilder erfolgt dann bei der Wiedergabe z. B. durch einen so genannten Splitter.

Je nach dem zu verwendenden Projektortyp kann es ferner vorteilhaft sein, zusätzlich zu der Vorverzerrung der Teilbilder eine Maskierung entsprechend der äußeren Begrenzung der jeweiligen Fensterflächen vorzunehmen, um den jeweils projizierten Bildbereich auf die Fensterflächen zu beschränken.

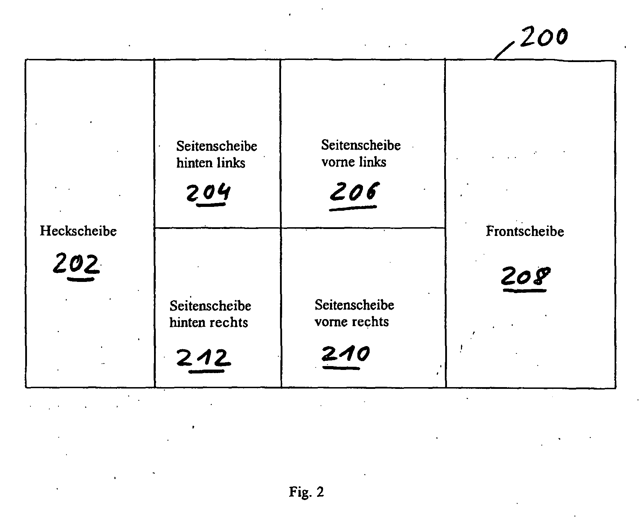

Die Figur 2 zeigt eine Bildfläche 200 in einem üblichen Bildformat, in dem beispielsweise ein Film aufgenommen worden ist. Die Bildfläche 200 wird in die Teilflächen 202, 204, 206, 208, 210 und 212 aufgeteilt. Die Teilfläche 202 ist dabei der Heckscheibe eines Fahrzeugs zugeordnet. Entsprechend ist die Teilfläche 204 der hinteren linken Seitenscheibe, die Teilfläche 206 der vorderen linken Seitenscheibe, die Teilfläche 208 der Frontscheibe, die Teilfläche 210 der vorderen rechten Seitenscheibe und die Teilfläche 212 der hinteren rechten Seitenscheibe des Fahrzeugs zugeordnet. Auf diese Art und Weise wird eine Videodatei in Teilbilder aufgeteilt, die den definierten Teilflächen 202 bis 212 auf der Bildfläche 200 entsprechen. Diese Teilbilder werden dann vorverzerrt (vergleiche Schritt 104 der Figur 1) und die für die spätere Wiedergabe gespeichert.

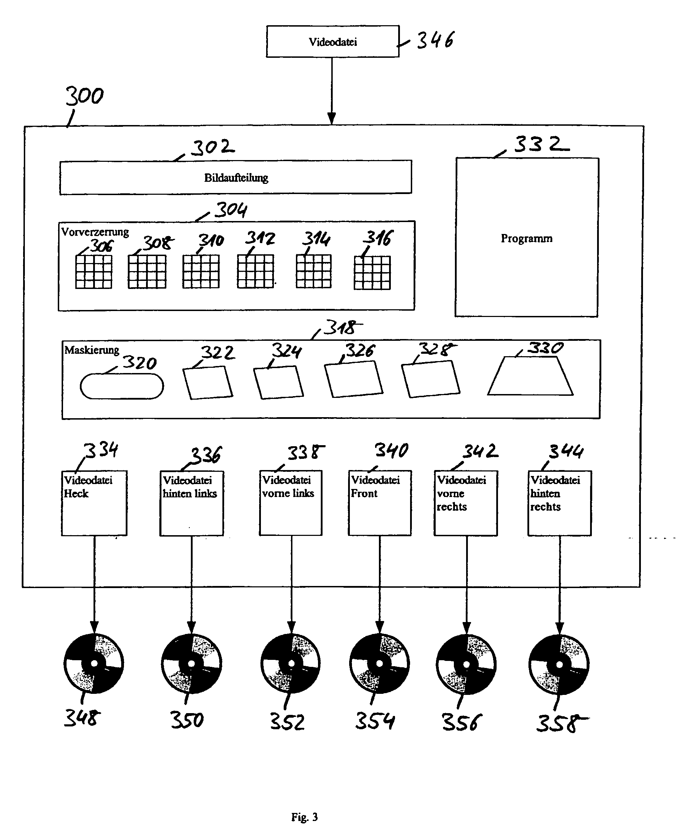

Die Figur 3 zeigt ein entsprechendes Postproductionsystem 300. Das Postproductionsystem 300 hat ein Programmmodul 302 für die Aufteilung eines Bildes in Teilbilder, z. B. nach einer Aufteilung entsprechend Figur 2.

Ferner hat das Postproductionsystem 300 einen Speicher 304, in dem verschiedene binäre Masken 306, 308, 310, 312, 314 und 316 gespeichert sind. Jede der binären Masken gibt dabei die dreidimensionale Form einer der durch die Innenseite der Fensterflächen gebildeten Projektionsflächen an.

In einem Speicher 318 des Postproductionsystems 300 sind verschiedene Masken 320, 322, 324, 326, 328 und 330 gespeichert, wobei jede der Masken wiederum einem bestimmten Fenster des Fahrzeugs zugeordnet ist.

Beispielsweise ist die binäre Maske 306 in den Speicher 304 der Heckscheibe des Fahrzeugs zugeordnet, gibt also dessen räumliche Form an. Die Maske 320 in dem Speicher 318 ist ebenfalls der Heckscheibe zugeordnet und entspricht dem äußeren Umriss der Heckscheibe, um die Projektion auf den Bereich der Heckscheibe zu beschränken.

Entsprechend sind die binäre Maske 308 und die Maske 322 der hinteren linken Seitenscheibe, die binäre Maske 310 und die Maske 324 der vorderen linken Seitenscheibe, die binäre Maske 312 und die Maske 326 der Frontscheibe, die binäre Maske 314 und die Maske 328 der vorderen rechten Seitenscheibe und die binäre Maske 316 und die Maske 330 der hinteren rechten Seitenscheibe zugeordnet.

Ferner hat das Postproductionsystem 300 ein Postproductionprogramm 332 zur Durchführung der Bildtransformationen und zur Erzeugung der Videodateien 334, 336, 338, 340, 342, 344 für die jeweiligen Teilbilder zur Wiedergabe auf den Projektoren.

Zur Vorbereitung der Postproduction gibt ein Benutzer die Art und Weise der gewünschten Bildaufteilung in das Programmmodul 320 ein. Ferner werden die binären Masken 306 bis 316 in den Speicher 304 eingegeben sowie die Masken 320 bis 330 in den Speicher 318. Auf dieser Grundlage kann nun eine Videodatei 346 für die Rückprojektion auf die Fensterflächen eines Fahrzeugs durch das Programm 332 transformiert werden.

Hierzu wird die Videodatei 346 in das Postproductionsystem 300 eingegeben. Die Videodatei 346 wird dann entsprechend der in dem Programmmodul 302 spezifizierten Bildaufteilung in Teilbilder zerlegt. Im Weiteren wird ohne Beschränkung der Allgemeinheit davon ausgegangen, dass die Bildaufteilung gemäß Figur 2 vom Benutzer vorgegeben worden ist.

Die einzelnen Teilbilder werden dann von dem Programm 332 auf der Grundlage der binären Masken 306 bis 316 so vorverzerrt, dass bei Projektion auf eine entsprechend gekrümmte Projektionsfläche ein scharfes Bild resultiert. Optional erfolgt zusätzlich eine Maskierung der vorverzerrten Bilder mittels der Masken 320 bis 330 durch das Programm 332.

Die resultierenden Videodateien 334 bis 344 der jeweiligen Teilbilder können dann separat auf verschiedenste Speichermedien wie z. B. Festplatten, Speicherchips, MPEG2-Player, CD-ROM's etc. gespeichert werden. Beispielsweise auch auf optische Datenträger, vorzugsweise DVDs 348 bis 358, d. h. die Videodatei 334, die das Teilbild für das Heckfenster beinhaltet, wird auf der DVD 348 gespeichert, die Videodatei 336 mit dem Teilbild für das hintere linke Seitenfenster auf der DVD 350, usw.

Alternativ kann von dem Programm 332 auch ein neues Gesamtbild erzeugt werden, was die einzelnen vorverzerrten und gegebenenfalls maskierten Teilbilder beinhaltet. Dieses Gesamtbild wird dann bei der Wiedergabe durch einen Splitter, oder auf Basis von Quicktime VR
(http://www.iqtvra.org/iqtvra/docs/en/index.php) wieder in die Teilbilder zerlegt.

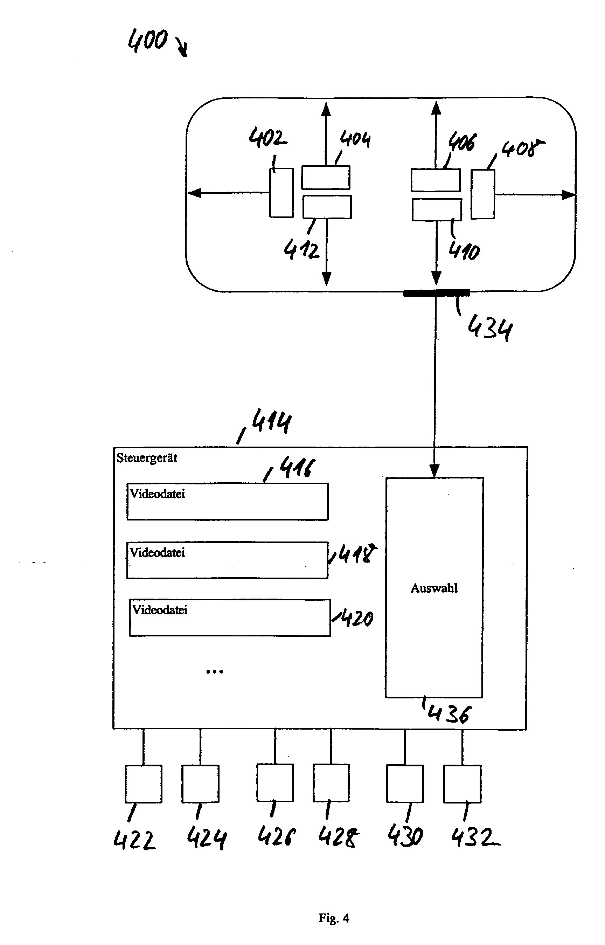

Die Figur 4 zeigt ein Kraftfahrzeug 400, wie z. B. eine Limousine, mit einer Projektionsvorrichtung zur Rückprojektion von Bildern auf die Fensterflächen des Kraftfahrzeugs 400.

Im Innenraum des Kraftfahrzeugs 400 sind Projektoren 402, 404, 406, 408, 410 und 412 angeordnet. Der Projektor 402 ist auf die Heckscheibe des Kraftfahrzeugs 400 gerichtet; der Projektor 404 auf die hintere linke Seitenscheibe, der Projektor 406 auf die vordere linke Seitenscheibe, der Projektor 408 auf die Frontscheibe, der Projektor 410 auf die rechte vordere Seitenscheibe und der Projektor 412 auf die rechte hintere Seitenscheibe.

Zur Verlängerung des optischen Weges von einem der Projektoren zu einer Scheibe kann ein Projektor auch z. B. auf dem Dachhimmel gerichtet werden, wobei Umlenkspiegel in dem Strahlengang für die Projektion auf das betreffende Fenster vorgesehen sein können. Dies ist insbesondere für die Projektoren 404, 406, 410 und 412 vorteilhaft, da hier bei direkter Ausrichtung der Projektoren auf die seitlichen Fensterflächen nur eine relativ kurze optische Weglänge zur Verfügung steht.

Die Projektoren 402 bis 412 sind mit einem Steuergerät 414 verbunden. Bei dem Steuergerät 414 kann es sich beispielsweise um einen entsprechend konfigurierten Personalcomputer handeln. Das Steuergerät 414 kann auf verschiedene Videodateien 416, 418, 420, ... zugreifen, wobei jede der Videodateien zuvor eine Postproduction entsprechend der Figuren 1, 2 und 3 durchlaufen hat. In dem hier betrachteten Ausführungsbeispiel der Figur 4 beinhaltet dabei jede der Videodateien 416, 418, 420, ... sämtliche Teilbilder, die bei der Wiedergabe von dem Steuergerät 414 separiert werden, um sie in die entsprechenden Projektoren einzugeben.

Zusätzlich können DVD-Abspielgeräte 422 bis 432 an das Steuergerät 414 angeschlossen werden, um die DVDs 348 bis 358 (vergleiche Figur 3) synchron abzuspielen. Im letzteren Fall wird beispielsweise die DVD 348 in das DVD-Abspielgerät 422 eingelegt, die DVD 350 in das DVD-Abspielgerät 424, die DVD 352 in das DVD-Abspielgerät 426 usw.

Zum Start der Wiedergabe startet das Steuergerät 414 sämtliche DVD-Abspielgeräte 422 bis 432 im Wesentlichen zum gleichen Zeitpunkt. Das von dem DVD-Abspielgerät 422 gelieferte Videosignal wird von dem Steuergerät 414 über eine der Übersichtlichkeit halber nicht gezeigte Verbindung an den Projektor 402 übertragen, ebenso wie das von dem DVD-Abspielgerät 424 gelieferte Videosignal, welches von dem Steuergerät über eine ebenfalls nicht gezeigte Verbindung an dem Projektor 404 übertragen wird, usw. Auf diese Art und Weise erhalten die einzelnen Projektoren 402 bis 412 jeweils ein Videosignal mit dem vorverzerrten Teilbild zur Projektion an die jeweilige Fensterfläche des Kraftfahrzeugs 400.

An einer oder mehreren der Fensterflächen des Kraftfahrzeugs 400 - in dem gezeigten Beispiel an der vorderen rechten Fensterfläche - ist eine berührungssensitive Folie 423 angeordnet. Dadurch wird auf der betreffenden Fensterfläche ein Touchscreen realisiert, der die Eingabe von Kommandos oder Auswahlentscheidungen durch einen Benutzer ermöglicht.

Die berührungssensitive Folie 434 ist drahtlos oder mit einem Kabel mit dem Steuergerät 414 verbunden. Die von der berührungssensitiven Folie 434 durch das Steuergerät 414 empfangenen Kommandos werden in ein Programmmodul 436 eingegeben. Das Programmmodul 436 startet die Wiedergabe derjenigen Videodatei aus den in dem Steuergerät 414 vorhandenen Videodateien, die von dem Benutzer direkt oder indirekt durch eine entsprechende Eingabe über die berührungssensitive Folie 434 ausgewählt worden ist. Hierdurch wird eine interaktive Form der Präsentation, der Information und/oder der Werbung ermöglicht.

### Bezugszeichenliste

- Bildfläche: 200
- Teilfläche: 202
- Teilfläche: 204
- Teilfläche: 206
- Teilfläche: 208
- Teilfläche: 210
- Teilfläche: 212
- Postproduction-System: 300
- Programmmodul: 302
- Speicher: 304
- binäre Maske: 306
- binäre Maske: 308
- binäre Maske: 310
- binäre Maske: 312
- binäre Maske: 314
- binäre Maske: 316
- Speicher: 318
- Maske: 320
- Maske: 322
- Maske: 324
- Maske: 326
- Maske: 328
- Maske: 330
- Postproduction-Programm: 332
- Videodatei: 334
- Videodatei: 336
- Videodatei: 338
- Videodatei: 340
- Videodatei: 342
- Videodatei: 344
- Videodatei: 346
- DVD: 348
- DVD: 350
- DVD: 352
- DVD: 354
- DVD: 356
- DVD: 358
- Kraftfahrzeug: 400
- Projektor: 402
- Projektor: 404
- Projektor: 406
- Projektor: 408
- Projektor: 410
- Projektor: 412
- Steuergerät: 414
- Videodatei: 416
- Videodatei: 418
- Videodatei: 420
- DVD-Abspielgerät: 422
- DVD-Abspielgerät: 424
- DVD-Abspielgerät: 426
- DVD-Abspielgerät: 428
- DVD-Abspielgerät: 430
- DVD-Abspielgerät: 432
- berührungssensitive Folie: 434
- Programmmodul: 436

## Patentansprüche

1. Verfahren zur Projektion eines Bildes auf zumindest eine Fensterfläche eines Fahrzeugs, wobei die Fensterfläche als Rückprojektionsfläche ausgebildet ist, und wobei das entsprechend einer Krümmung der Fensterfläche vorverzerrte Bild auf die Fensterfläche projiziert wird.

2. Verfahren nach Anspruch 1, wobei das Bild in eine Anzahl von Teilbildern aufgeteilt ist, und jedes der Teilbilder einer der Fensterflächen des Fahrzeugs zugeordnet ist, wobei jedes Teilbild entsprechend einer Krümmung der zugeordneten Fensterfläche vorverzerrt ist und die Teilbilder auf die jeweils zugeordneten Fensterflächen projiziert werden.

3. Verfahren nach Anspruch 1 oder 2, wobei jedes der vorverzerrten Teilbilder auf einem separaten Datenträger gespeichert und die Wiedergabe von den separaten Datenträgern synchron erfolgt.

4. Verfahren nach Anspruch 1 oder 2, wobei die Teilbilder in einem Gesamtbild gespeichert sind und das Gesamtbild bei der Wiedergabe in die Teilbilder zerlegt wird.

5. Verfahren nach einem der vorhergehenden Ansprüche 1 bis 4, wobei eine Maskierung des Bildes bzw. der Teilbilder entsprechend der Form der Fensterfläche bzw. der Fensterflächen erfolgt.

6. Verfahren nach einem der vorhergehenden Ansprüche 1 bis 5, wobei es sich bei dem Bild um eine Videodatei, digitalisierte Videodaten und/oder eine Computeranimation handelt.

7. Verfahren nach einem der hervorgehenden Ansprüche 1 bis 6, wobei auf zumindest einer der Fensterflächen berührungssensitive Mittel angeordnet sind, wobei die Auswahl eines zu projizierenden Bildes über die berührungssensitiven Mittel erfolgt.

8. Verfahren zur Vorverzerrung eines Bildes für eine Rückprojektion auf zumindest eine Fensterfläche eines Fahrzeugs mit folgenden Schritten:
- Eingabe von Daten zur Beschreibung der Krümmung der zumindest einen Fensterfläche,
- Vorverzerrung des Bildes entsprechend der Krümmung.

9. Verfahren nach Anspruch 8 mit folgenden weiteren Schritten:
- Eingabe einer Aufteilung des Bildes in Teilbilder,
- Zuordnung der Teilbilder zu Fensterflächen des Fahrzeugs,
- Eingabe der Daten zur Beschreibung der Krümmung für jede der Fensterflächen,
- Vorverzerrung jedes der Teilbilder entsprechend der Krümmung der jeweils zugeordneten Fensterfläche.

10. Computerprogrammprodukt, insbesondere digitales Speichermedium, zur Vorverzerrung eines Bildes für eine Rückprojektierung auf zumindest eine Fensterfläche eines Fahrzeugs mit Programmmitteln zur Durchführung der folgenden Schritte:
- Eingabe von Daten zur Beschreibung der Krümmung der zumindest einen Fensterfläche,
- Vorverzerrung des Bildes entsprechend der Krümmung.

11. Projektierungsvorrichtung zur Projektion eines Bildes auf zumindest eine Fensterfläche eines Fahrzeugs (400), wobei die Fensterfläche als Rückprojektionsfläche ausgebildet ist, mit mindestens einem Projektor (402, 404, 406, 408, 410, 412) zur Projektion des entsprechend einer Krümmung der Fensterfläche vorverzerrten Bildes auf die Fensterfläche.

12. Projektionsvorrichtung nach Anspruch 11, wobei das Bild in einer Anzahl von Teilbilder (202, 204, 206, 208, 210, 212) aufgeteilt ist, und mit einem Projektor für jedes der Teilbilder.

13. Projektionsvorrichtung nach Anspruch 11 oder 12, mit einem Abspielgerät (422, 424, 426, 428, 430, 432) für jedes der Teilbilder,' wobei die Abspielgeräte miteinander synchronisierbar sind.

14. Projektionsvorrichtung nach Anspruch 11, 12 oder 13, wobei die Teilbilder in einem Gesamtbild (416, 418, 420) gespeichert sind, und mit Mitteln (414) zur Zerlegung des Gesamtbildes in die Teilbilder.

15. Projektionsvorrichtung nach einem der vorhergehenden Ansprüche 11 bis 14, mit berührungssensitiven Mitteln (434) zur Anbringung auf zumindest eine der Fensterflächen zur Auswahl eines Bildes für die Projektion.

16. Projektionsvorrichtung nach einem der vorhergehenden Ansprüche 11 bis 14, mit Computeranimationsmitteln zur Erzeugung von Bilddaten.
